# EUROPEAN PATENT APPLICATION

(11) **EP 4 353 578 A1**
(43) Date of publication of application: **17.04.2024**
(21) Application number: 22807284.9
(22) Date of filing: 06.04.2022
(51) Int. Cl.: B63B 21/00, B63B 35/44, B64C 27/08, B64C 39/02

(54) **MOORING SYSTEM AND MOORING METHOD**

(30) Priority: 14.05.2021 JP 2021082667
(71) Applicant: KAWASAKI JUKOGYO KABUSHIKI KAISHA, Kobe-shi, Hyogo 650-8670 (JP)
(72) Inventor: OE, Hiroshi, Hyogo, 650-8670 (JP); KAZAMA, Eiki, Hyogo, 650-8670 (JP); NODA, Takashi, Hyogo, 650-8670 (JP)
(74) Representative: Dehns
(86) International application number: PCT/JP2022/017179
(87) International publication number: WO 2022/239580

(57) **Abstract**

A mooring system moors a floating structure to a mooring facility, one of the floating structure and the mooring facility being a first object, the other being a second object. The mooring system includes: a mooring rope; a winch that is located at the second object and winds and unwinds the mooring rope; a locking tool that is located at the second object and locks a tip portion of the mooring rope such that the tip portion of the mooring rope is engageable with and disengageable from the locking tool; at least one unmanned machine including a holding tool that holds the mooring rope; and a control device configured to control the unmanned machine such that the unmanned machine moves from the second object to a mooring bit located at the first object while holding the mooring rope, and hangs an intermediate portion of the mooring rope to the mooring bit, the intermediate portion being a portion between the tip portion of the mooring rope and a base portion of the mooring rope which is unwound from the winch.

## Description

### Technical Field

The present disclosure relates to a mooring system and a mooring method each of which moors a floating structure, such as a ship, to a mooring facility, such as a quay.

### Background Art

A conventional mooring work of mooring a ship to a quay through a ship mooring rope has been performed by cooperation of a land-side worker and a ship-side worker. The conventional mooring work is performed by the following procedure. First, the ship-side worker unwinds the ship mooring rope from a hawser drum mounted on the ship and throws a heaving line, tied to a tip of the ship mooring rope, toward the quay. Next, the land-side worker pulls the heaving line to draw the ship mooring rope and fixes one end of the ship mooring rope to a ship mooring bit located at the quay. Finally, the ship mooring rope is wound by the hawser drum mounted on the ship. Thus, tensile force is applied to the ship mooring rope, and the ship is moored to the quay.

To realize manpower saving in the above mooring work, PTL 1 proposes that an end portion of a mooring rope connected to a first connector is carried to a second connector by using an unmanned machine (aerial drone, amphibious drone). PTL 1 discloses: a case where the first connector is located at the ship, and the second connector is located at the quay; a case where the first connector is located at the quay, and the second connector is located at the ship; and a case where the first connector and the second connector are located at the ship.

### Citation List

### Patent Literature

PTL 1: International Publication No. WO2018/026285

### Summary of Invention

### Technical Problem

PTL 1 describes that the unmanned machine carries the tip of the mooring rope and can fix and unfix the tip of the mooring rope to and from the second connector (ship mooring bit, for example), but does not disclose a specific configuration of the unmanned machine. The unmanned machine may be able to hang the tip of the mooring rope to the second connector. However, the control of the unmanned machine requires a high degree of positional accuracy. Therefore, this is not realistic from the viewpoint of work efficiency.

The present disclosure was made under these circumstances, and an object of the present disclosure is to propose a mooring system that moors and unmoors a floating body, such as a ship, to and from a mooring bit located at a quay or the like and can realize manpower saving in mooring and unmooring work.

### Solution to Problem

A mooring system according to one aspect of the present disclosure is a mooring system that moors a floating structure to a mooring facility, one of the floating structure and the mooring facility being a first object, the other being a second object. The mooring system includes:
a mooring rope;
a winch that is located at the second object and winds and unwinds the mooring rope;
a locking tool that is located at the second object and locks a tip portion of the mooring rope such that the tip portion of the mooring rope is engageable with and disengageable from the locking tool;
at least one unmanned machine including a holding tool that holds the mooring rope; and
a control device configured to control the unmanned machine such that the unmanned machine moves from the second object to a mooring bit located at the first object while holding the mooring rope, and hangs an intermediate portion of the mooring rope to the mooring bit, the intermediate portion being a portion between the tip portion of the mooring rope and a base portion of the mooring rope which is unwound from the winch.

Moreover, a mooring method according to one aspect of the present disclosure is a mooring method of mooring a floating structure to a mooring facility, one of the floating structure and the mooring facility being a first object, the other being a second object. The mooring method includes:
locating at the second object a winch that winds and unwinds a mooring rope and a locking tool that is engageable with and disengageable from a tip portion of the mooring rope;
holding the mooring rope by at least one unmanned machine;
controlling the unmanned machine such that the unmanned machine moves from the second object to a mooring bit located at the first object while holding the mooring rope, and hangs an intermediate portion of the mooring rope to the mooring bit, the intermediate portion being a portion between the tip portion of the mooring rope and a base portion of the mooring rope which is unwound from the winch; and
locking the tip portion of the mooring rope to the locking tool before or after the mooring rope is hung to the mooring bit.

### Advantageous Effects of Invention

The present disclosure can propose the mooring system that moors and unmoors the floating body, such as a ship, to and from the mooring bit located at a quay or the like and can realize manpower saving in mooring and unmooring work.

### Brief Description of Drawings

FIG. 1 is a plan view showing that a floating structure is moored to a mooring facility by a mooring system according to Embodiment 1 of the present disclosure.
FIG. 2 is a schematic configuration diagram of the mooring system.
FIG. 3 is a schematic configuration diagram of a winch.
FIG. 4 is a diagram showing a schematic configuration of an unmanned machine.
FIG. 5A is a diagram showing the configuration of a holding tool.
FIG. 5B is a diagram showing the configuration of the holding tool.
FIG. 5C is a diagram showing the configuration of the holding tool.
FIG. 6 is a diagram showing that the unmanned machine hangs a mooring rope to a mooring bit.
FIG. 7 is a plan view showing that the unmanned machines hang the mooring rope to the mooring bit in the mooring system according to Modified Example of Embodiment 1.
FIG. 8 is a diagram showing that the floating structure is moored to the mooring facility by the mooring system according to Embodiment 2 of the present disclosure.
FIG. 9 is a diagram showing one example of a direction in which the mooring rope is wound around the mooring bit.
FIG. 10 is a diagram showing one example of the direction in which the mooring rope is wound around the mooring bit.
FIG. 11 is a diagram showing that the unmanned machines hang the mooring rope to the mooring bit in the mooring system according to Modified Example of Embodiment 2.
FIG. 12 is a diagram showing that the unmanned machine hangs the mooring rope to the mooring bit in the mooring system according to Embodiment 3 of the present disclosure.

### Description of Embodiments

### Embodiment 1

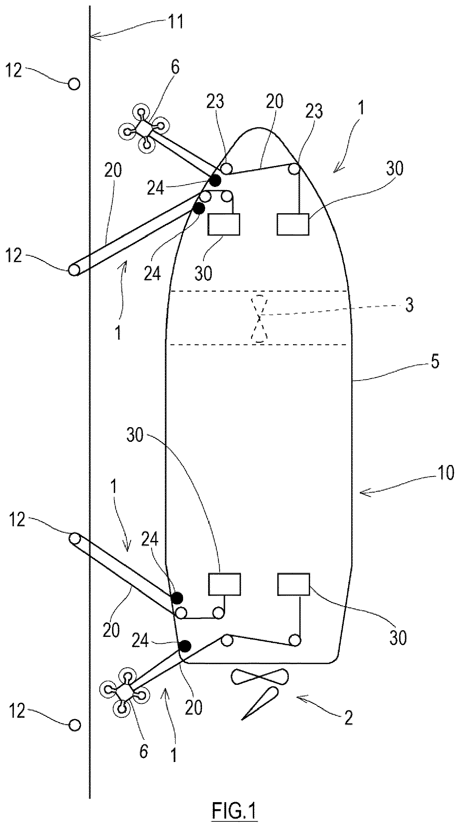

Next, Embodiment 1 of the present disclosure will be described with reference to the drawings. FIG. 1 is a plan view showing that a floating structure 10 is moored to a mooring facility 11 by a mooring system 1 according to Embodiment 1 of the present disclosure. In the example shown in FIG. 1, the mooring system 1 is located at the floating structure 10, and a mooring bit 12 is located at the mooring facility 11. However, the mooring system 1 may be located at the mooring facility 11, and the mooring bit 12 may be located at the floating structure 10. Some of components of the mooring system 1 may be located at the floating structure 10, and the rest of the components of the mooring system 1 may be located at the mooring facility 11 or another structure (small ship, for example).

The floating structure 10 according to the present embodiment is the boat-shaped floating structure 10 (i.e., a ship). However, the floating structure 10 is not limited to the ship and may be a structure, such as an ocean platform (a floating body production facility or a floating body storage facility), floating on the ocean. Moreover, the mooring facility 11 according to the present embodiment is a quay at a port. However, the mooring facility 11 is not limited to the quay and may be a ship other than the floating structure 10, a mooring floating body, a floating body production facility, or the like.

The floating structure 10 includes: a vessel 5; at least one propeller 2 that outputs thrust in a front-rear direction with respect to the vessel 5; and at least one side thruster 3 that outputs thrust in a lateral direction with respect to the vessel 5. As shown in FIG. 1, a horizontal direction connecting a bow and stern of the vessel 5 is referred to as the "front-rear direction" of the vessel 5, and a horizontal direction (left-right direction) orthogonal to the front-rear direction is referred to as the "lateral direction" of the vessel 5. The floating structure 10 may not include any propellers or thrusters and may be moved by being towed.

The floating structure 10 includes at least one mooring system 1. In the example shown in FIG. 1, the mooring systems 1 are located at four positions of the vessel 5 which are separated from each other in the front-rear direction. However, the number of mooring systems 1 located at the floating structure 10 is not limited to the present embodiment.

### Configuration of Mooring System 1

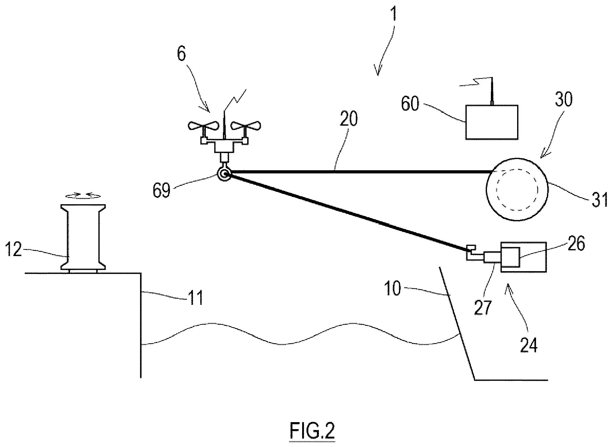

The mooring systems 1 are substantially the same in configuration as each other. FIG. 2 is a schematic configuration diagram of the mooring system 1. As shown in FIG. 2, the mooring system 1 includes: a mooring rope 20; a winch 30 that can wind and unwind the mooring rope 20; a locking tool 24; at least one conveyance unmanned machine (hereinafter simply referred to as an "unmanned machine 6") that conveys the mooring rope 20; and a control device 60. The unmanned machine 6 may be shared by the mooring systems 1. In the present embodiment, the unmanned machine 6 is located at the floating structure 10. However, the unmanned machine 6 may be located at the mooring facility 11. Moreover, in the present embodiment, the control device 60 is located at the floating structure 10. However, the control device 60 may be located at the mooring facility 11 or may be located at a small ship independent from the floating structure 10.

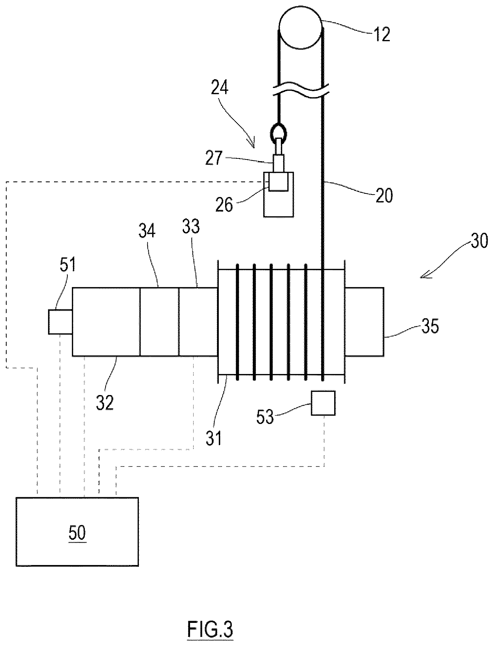

FIG. 3 is a schematic configuration diagram of the winch 30. The winch 30 shown in FIG. 3 includes: a hawser drum 31 around which the mooring rope 20 is wound; a motor 32 that rotates the hawser drum 31; a hydraulic clutch 33 that switches between a state where power transmission from the motor 32 to the hawser drum 31 is established and a state where such power transmission is cut; a reduction gear 34 located on a power transmitting path extending from the motor 32 to the hawser drum 31; and a brake 35 that applies braking force at all times. The winch 30 according to the present embodiment is of an electrohydraulic type. However, the structure of the winch 30 is not limited to the above, and the winch 30 may be of an electric type.

When the mooring rope 20 is wound around the hawser drum 31, the power transmitting path extending from the motor 32 to the hawser drum 31 is established by the clutch 33, and the hawser drum 31 is rotated in a winding direction. When the mooring rope 20 is unwound from the hawser drum 31, the clutch 33 is disengaged, and the power transmitting path extending from the motor 32 to the hawser drum 31 is cut. Thus, the hawser drum 31 becomes a state of being able to idle and can rotate in an unwinding direction. Or, when unwinding the mooring rope 20, the power transmitting path extending from the motor 32 to the hawser drum 31 may be established by the clutch 33, and the hawser drum 31 may be rotated in the unwinding direction. The mooring rope 20 unwound from the hawser drum 31 is protected and guided by a suitable mooring rope guide 23, such as a chock (mooring hole), a fair-leader, a deck end roller, or a stand roller.

The mooring system 1 further includes a rotational position sensor 51, a tensile force sensor 26, a rope length measuring device 53, and a winch control device 50 configured to control the operation of the winch 30 based on detected values of the rotational position sensor 51, the tensile force sensor 26, and the rope length measuring device 53. The rotational position sensor 51 detects a rotational position and rotational frequency of the motor 32 or the hawser drum 31. The rope length measuring device 53 measures the length of the mooring rope 20 which has been unwound from the hawser drum 31. The winch control device 50 measures the rotation of the motor 32 or the hawser drum 31 and estimates the length of the wound mooring rope 20 and the length of the unwound mooring rope 20 based on a detection signal of the rotational position sensor 51 and/or a measured value of the rope length measuring device 53.

The locking tool 24 locks a tip of the mooring rope 20 such that the tip of the mooring rope 20 is engageable with and disengageable from the locking tool 24. The locking tool 24 is located at the floating structure 10. The locking tool 24 is located at a position, such as a position on a deck, a side surface of the vessel 5, or a support base of the hawser drum 31 of the mooring system 1, which is appropriate for the route of the mooring rope 20.

The engagement the mooring rope 20 with the locking tool 24 and the disengagement of the mooring rope 20 from the locking tool 24 may be performed by a worker. Or, the engagement of the mooring rope 20 with the locking tool 24 may be performed by the worker, and the disengagement of the mooring rope 20 from the locking tool 24 may be performed automatically. To be specific, the locking tool 24 may have an automatic release function of automatically releasing the mooring rope 20. In this case, for example, the locking tool 24 includes an actuator that performs a disengaging operation, and when the actuator operates upon reception of a disengaging signal from an operating unit (not shown), the mooring rope 20 is disengaged from the locking tool 24.

The locking tool 24 includes a tensile force buffer 27. The tensile force buffer 27 includes a buffer member, such as a spring. When unexpected excessive tensile force is applied to the mooring rope 20 engaged with the locking tool 24, the tensile force buffer 27 absorbs the tensile force to prevent the rupture of the mooring rope 20 and the damage of the locking tool 24 or the structure to which the locking tool 24 is fixed.

The locking tool 24 includes the tensile force sensor 26. The tensile force sensor 26 is, for example, a load cell, and the tensile force of the mooring rope 20 can be estimated based on a load detected by the load cell. The winch control device 50 controls the rotation of the hawser drum 31 based on the detected value of the tensile force sensor 26 such that the tensile force acting on the mooring rope 20 is maintained at a predetermined value that does not exceed a predetermined upper limit.

The unmanned machine 6 moves the mooring rope 20 from the floating structure 10 to the mooring bit 12. The unmanned machine 6 may be able to move between the floating structure 10 and the mooring facility 11 and may travel on the sea, on land, or in the sky. Examples of the unmanned machine 6 include: an unmanned aircraft, such as a drone; and an amphibious unmanned machine, such as an amphibious drone.

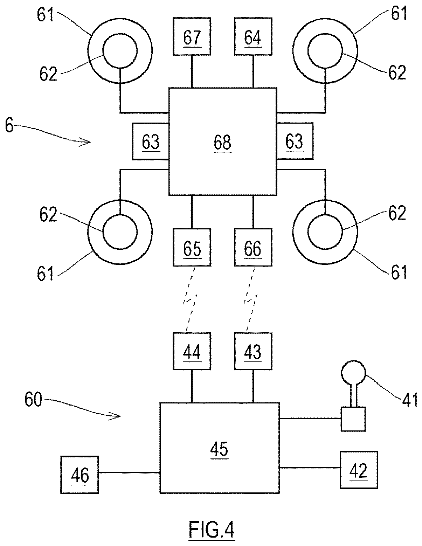

FIG. 4 is a diagram showing a schematic configuration of the unmanned machine 6. As shown in FIG. 4, the unmanned machine 6 includes pairs of rotors 61 and motors 62, a battery 63, sensors 64, a transmitter 65, a receiver 66, a camera 67, and a controller 68. The motor 62 rotates the rotor 61. The battery 63 supplies electric power to the motor 62. Instead of the battery 63, an engine may be mounted. The sensors 64 include at least one type of detector that detects a flying angle, flying speed, and positional information (GPS positional information) of the unmanned machine 6. However, the configuration of the unmanned machine 6 is not limited to the present embodiment, and the unmanned machine 6 may fly and/or swim (dive) by remote control or autonomously.

The unmanned machine 6 is controlled by the control device 60. The control device 60 is a manipulating device that performs remote control of the unmanned machine 6. The control device 60 may be a device that performs autonomous movement (autonomous flight) of the unmanned machine 6. The control device 60 includes an operation tool 41, a display 42, a transmitter 43, a receiver 44, a calculator 45, and a communicator 46.

The operation tool 41 is operated by an operator or a manipulator, and information, operation, and the like are input to the calculator 45 through the operation tool 41. For example, at least one of a keyboard, a lever, a button, a touch-panel-type display, and a joystick may be used as the operation tool 41. At least one of a display of a smartphone, a display of a tablet personal computer, a goggle display, and a head mount display may be used as the display 42. The transmitter 43 transmits, for example, a command signal to the unmanned machine 6. The receiver 44 receives an image signal, positional information, information detected by the sensors 64, and the like from the unmanned machine 6. By utilizing a communication network and a GPS communicator, the communicator 46 performs transmission and reception of information, such as weather/marine phenomenon information and positional information of the mooring bit 12, utilized in the mooring system 1. The calculator 45 acquires information and signals through the operation tool 41, the receiver 44, and the communicator 46, performs calculation processing, and outputs the result of the calculation processing through the display 42 and the transmitter 43. The calculator 45 may include a manual control program that generates and sends a command signal based on information input through the operation tool 41. Or, the calculator 45 may include an automatic control program that generates and sends a command signal based on image information from the camera 67 mounted on the unmanned machine 6 such that the unmanned machine 6 performs the autonomous movement (autonomous flight) along a set route.

The command signal sent from the transmitter 43 of the control device 60 is received by the receiver 66 of the unmanned machine 6 and sent to the controller 68. The controller 68 processes the command signal together with the information acquired from the sensors 64 and controls the rotational frequency of the rotor 61 driven by the motor 62. Moreover, the controller 68 transmits image (or video image) information, taken by the camera 67, to the control device 60 through the transmitter 65. The control device 60 outputs the received image information to the display 42. The manipulator can control the unmanned machine 6 by utilizing the image information shown on the display 42.

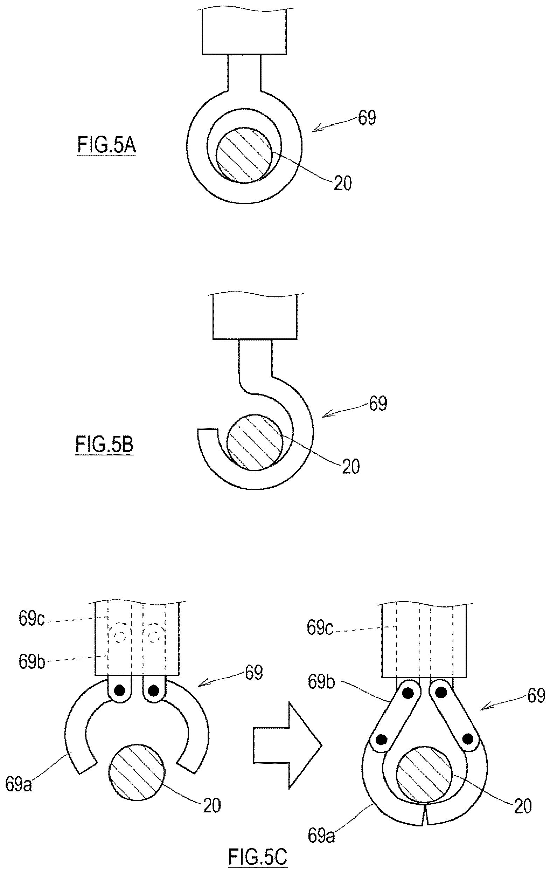

The unmanned machine 6 includes a holding tool 69 that holds the mooring rope 20. An intermediate portion of the mooring rope 20 is inserted through the holding tool 69. The intermediate portion of the mooring rope 20 is a portion between a tip portion locked to the locking tool 24 and a portion wound around the hawser drum 31. The holding tool 69 includes an annular portion into which the mooring rope 20 can be inserted. The mooring rope 20 is loosely inserted into the holding tool 69. A held position of the mooring rope 20 held by the holding tool 69 is variable. Examples of the shape of such holding tool 69 include a ring shape (FIG. 5A), a hook shape (FIG. 5B), and an open-close claw shape (FIG. 5C). The holding tool 69 (FIG. 5C) having the open-close claw shape includes, for example, two claws. Each of the claws includes: a circular-arc link 69a located at a tip of the claw; two linear links 69b and 69c connected to the circular-arc link 69a; joints each coupling the adjacent links to each other; and actuators (not shown) that drive the joints. The two claws can be opened and closed by the rotations of the joints.

### Mooring Method Using Mooring System 1

Next, a mooring method using the mooring system 1 configured as above will be described. The mooring method roughly includes (1) a preparing step, (2) a rope hanging step, and (3) a rope tensing step. The rope hanging step may be performed manually or automatically.

### (1) Preparing Step

The tip of the mooring rope 20 is engaged with the locking tool 24, and the mooring rope 20 is unwound from the hawser drum 31 of the winch 30. The mooring rope 20 may be unwound in advance by a length adequate when the mooring rope 20 extends to the mooring bit 12 and returns, or may be unwound little by little in accordance with the movement of the unmanned machine 6. The intermediate portion of the unwound mooring rope 20 is held by the holding tool 69 of the unmanned machine 6. The unmanned machine 6 stands by at a stand-by position defined at the floating structure 10.

### (2) Rope Hanging Step

### When Manually Performing Rope Hanging Step

When manually performing the rope hanging step, the manipulator performs the remote control of the unmanned machine 6 by using the operation tool 41 connected to the control device 60. The unmanned machine 6 controlled by the manipulator departs from the stand-by position, moves toward the mooring bit 12, hangs the mooring rope 20 to the mooring bit 12, and returns to the stand-by position again. The manipulator can control the unmanned machine 6 by visually confirming the image taken by the camera 67 mounted on the unmanned machine 6 or by visually grasping a positional relation between the unmanned machine 6 and the mooring bit 12.

### When Automatically Performing Rope Hanging Step

When automatically performing the rope hanging step, the position of the mooring bit 12 as a target and the designation of the mooring system 1 including the mooring rope 20 to be hung to the mooring bit 12 are input to the control device 60 by the operator. The position of the mooring bit 12 as the target can be acquired from map information. Or, a positional information transmitter may be located at the mooring bit 12, and the positional information of the mooring bit 12 may be sent from the positional information transmitter to the control device 60 through a communication network. Examples of the positional information transmitter include: a GPS sender that receives a radio wave from a GPS satellite, calculates positional information, and sends the positional information to the control device 60; and an IC tag that grasps positional information by utilizing a communication network and sends the positional information to the control device 60. Or, a light source may be located at the mooring bit 12, and a positional information detector may calculate positional information of the mooring bit 12 by utilizing an optical sensor that detects light from the light source, and transmit the positional information to the control device 60.

A command of starting rope hanging is input to the control device 60 by the operator. The control device 60 acquires the command of starting rope hanging and calculates a flight route of the unmanned machine 6. To calculate the flight route, the control device 60 uses the weather/marine phenomenon information of the mooring facility 11, the positional information of the unmanned machine 6, the positional information of the mooring bit 12, and the like. The control device 60 calculates such a flight route that the unmanned machine 6 departs from the stand-by position, moves to the mooring bit 12, hangs the mooring rope 20 to the mooring bit 12, and returns to the stand-by position again. It is desirable that to suppress an influence of wind, the flight route of the unmanned machine 6 be close to a water surface. The control device 60 performs the automatic control of the unmanned machine 6 such that the unmanned machine 6 moves along the calculated flight route. The control device 60 can control the operation of the unmanned machine 6 by analyzing the image taken by the camera 67 mounted on the unmanned machine 6.

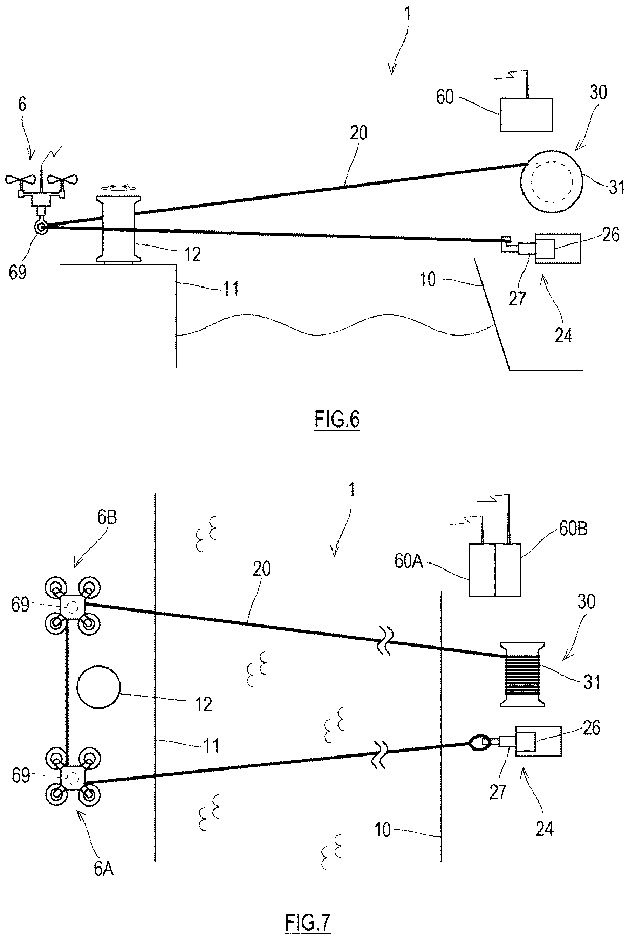

In the rope hanging step (both of the rope hanging step manually performed and the rope hanging step automatically performed), the unmanned machine 6 moves from the stand-by position to the mooring bit 12 while holding the intermediate portion of the mooring rope 20. It is desirable that to suppress an influence of wind, the unmanned machine 6 move close to the water surface. The mooring rope 20 including the intermediate portion held by the unmanned machine 6 forms a relatively large loop having a length that is about twice a distance between the floating structure 10 and the mooring bit 12. When the holding tool 69 of the unmanned machine 6 flies over the mooring bit 12 and then moves down, the loop of the mooring rope 20 is hung to the mooring bit 12 (see FIG. 6). Whether or not the mooring rope 20 is hung to the mooring bit 12 can be determined by the image taken by the camera 67 of the unmanned machine 6. When the mooring rope 20 is hung to the mooring bit 12, the unmanned machine 6 releases the mooring rope 20 and then returns to the stand-by position of the floating structure 10. However, the unmanned machine 6 may return to the stand-by position of the floating structure 10 along the mooring rope 20 without releasing the mooring rope 20. When the movement of the unmanned machine 6 is restricted by the mooring rope 20 as above, the unmanned machine 6 can be collected even if the unmanned machine 6 becomes uncontrollable or breaks down in the middle of returning to the stand-by position of the floating structure 10 along the mooring rope 20.

### (3) Rope Tensing Step

When the mooring rope 20 is hung to the mooring bit 12, and the mooring rope 20 is wound around the hawser drum 31 by the operation of the winch 30, tensile force is applied to the mooring rope 20. Thus, the floating structure 10 is moored to the mooring facility 11. In this case, the mooring rope 20 slides on the mooring bit 12. To reduce wear of the mooring bit 12 and/or the mooring rope 20, a portion of the mooring bit 12 to which the mooring rope 20 is hung may include a roller that turns. In the examples shown in FIGS. 2 and 6, at least a body portion of the mooring bit 12 to which the mooring rope 20 is hung includes a pulley (or a roller) that rotates about an axis extending in a vertical direction.

### Unmooring Method Using Mooring System 1

The mooring system 1 can unmoor the floating structure 10. First, the mooring rope 20 is unwound from the hawser drum 31, and the tensile force of the mooring rope 20 is adequately reduced. Next, the mooring rope 20 is disengaged from the locking tool 24. Disengaging the mooring rope 20 from the locking tool 24 may be performed manually or automatically. After the mooring rope 20 is released from the locking tool 24, the mooring rope 20 is wound around the hawser drum 31 by the operation of the winch 30. Thus, the floating structure 10 is unmoored.

### Summary

As described above, the mooring system 1 according to the present embodiment is a mooring system that moors the floating structure 10 to the mooring facility 11, one of the floating structure 10 and the mooring facility 11 being a first object, the other being a second object, the mooring system 1 including:
the mooring rope 20;
the winch 30 that is located at the second object and winds and unwinds the mooring rope 20;
the locking tool 24 that is located at the second object and locks the tip portion of the mooring rope 20 such that the tip portion of the mooring rope 20 is engageable with and disengageable from the locking tool 24;
at least one unmanned machine 6 including the holding tool 69 that holds the mooring rope 20; and
the control device 60 configured to control the unmanned machine 6 such that the unmanned machine 6 moves from the second object to the mooring bit 12 located at the first object while holding the mooring rope 20, and hangs the intermediate portion of the mooring rope 20 to the mooring bit 12, the intermediate portion being a portion between the tip portion of the mooring rope 20 and a base portion of the mooring rope 20 which is unwound from the winch 30.

Similarly, the mooring method according to the present embodiment is a mooring method that moors the floating structure 10 to the mooring facility 11, one of the floating structure 10 and the mooring facility 11 being the first object, the other being the second object, the mooring method including:
locating at the second object the winch 30 that winds and unwinds the mooring rope 20 and the locking tool 24 that locks the tip portion of the mooring rope 20 such that the tip portion of the mooring rope 20 is engageable with and disengageable from the locking tool 24;
holding the mooring rope 20 by at least one unmanned machine 6;
controlling the unmanned machine 6 such that the unmanned machine 6 moves from the second object to the mooring bit 12 located at the first object while holding the mooring rope 20, and hangs the intermediate portion of the mooring rope 20 to the mooring bit 12, the intermediate portion being a portion between the tip portion of the mooring rope 20 and the base portion of the mooring rope 20 which is unwound from the winch 30; and
before hanging the mooring rope 20 to the mooring bit 12, locking the tip portion of the mooring rope 20 to the locking tool 24.

According to the above mooring system 1 and the above mooring method, the work of hanging the mooring rope 20 to the mooring bit 12 is performed by the unmanned machine 6. Since the unmanned machine 6 hangs the intermediate portion of the mooring rope 20 to the mooring bit 12, the control of the unmanned machine 6 does not require a high degree of positional accuracy. Therefore, even when an error of the position of the unmanned machine 6 relative to the mooring bit 12 occurs due to wind or accuracy of meters, the work of hanging the mooring rope 20 to the mooring bit 12 can be stably performed. Thus, a worker who ties the mooring rope 20 to the mooring bit 12 is not required, and manpower saving can be realized. Especially, the number of workers who directly touch or approach the mooring rope 20 in the mooring work can be reduced. Moreover, for example, even when a region including the quay where the mooring bit 12 is located suffers from a fire, an earthquake, or the like, and it is difficult to assign workers at the quay, the floating structure 10 can be moored to the quay, and goods can be transported to a disaster-stricken area at an early stage through a sea route.

In the mooring system 1 configured as above, the holding tool 69 may hold the intermediate portion of the mooring rope 20 which is located between the tip portion engaged with the locking tool 24 and the base portion unwound from the winch 30, and the control device 60 may control the unmanned machine 6 such that the unmanned machine 6 moves from the second object to the mooring bit 12 while holding the intermediate portion of the mooring rope 20. Similarly, in the above mooring method, the unmanned machine 6 may hold the intermediate portion of the mooring rope 20 which is located between the tip portion engaged with the locking tool 24 and the base portion unwound from the winch 30, and the unmanned machine 6 may be controlled to move from the second object to the mooring bit 12 while holding the intermediate portion of the mooring rope 20. Before the mooring rope 20 is hung to the mooring bit 12, the tip portion of the mooring rope 20 is locked to the locking tool 24.

According to the above mooring system 1 and the above mooring method, the unmanned machine 6 may hang to the mooring bit 12 the adequately large loop of the mooring rope 20 which has a length that is about twice the distance between the mooring bit 12 and the second object. Therefore, the control of the unmanned machine 6 does not require a high degree of positional accuracy.

In the above mooring system 1 and the above mooring method, when unmooring the floating structure 10, the tip portion of the mooring rope 20 is released from the locking tool 24, and the mooring rope 20 is wound by the winch 30. Therefore, in the unmooring work, the worker at the mooring bit 12 side who performs the work of releasing the mooring rope 20 from the mooring bit 12 is not required, and manpower saving can be realized. For example, even when the floating structure 10 is moored to the mooring bit 12 located at the quay of the disaster-stricken area, and it is difficult to assign workers at the quay, the floating structure 10 can be urgently unmoored and leave the quay. When unmooring the floating structure 10, the control device 60 may control the unmanned machine 6 such that: after the unmanned machine 6 holds the tip portion of the mooring rope 20 in advance, the tip portion of the mooring rope 20 is released from the locking tool 24; and the unmanned machine 6 flies along a movement route of the tip portion of the mooring rope 20. Thus, at the time of the unmooring, the tip portion of the mooring rope 20 can be prevented from falling into the sea.

Moreover, in the above mooring system 1 and the above mooring method, the mooring rope 20 turns at the mooring bit 12, and therefore, is used in a double state. Therefore, the tensile force applied to the mooring rope 20 may be about half the tensile force applied to the mooring rope 20 that is used in a single state. Thus, the winch 30 that applies the tensile force to the mooring rope 20 can be reduced in size. In addition, since the mooring rope 20 that is low in strength, thin, lightweight can be used, the mooring rope 20 is suitable for transportation by the unmanned machine 6.

In the mooring system 1 configured as above, the position of the locking tool 24 is not especially limited. However, the locking tool 24 may be located at a support base of the winch 30. In this case, a space where the locking tool 24 is located is easily secured. In addition, the mooring rope 20 unwound from the winch 30 turns at the mooring bit 12, and therefore, is in the double state, and the routes of the double portions of the mooring rope 20 become substantially the same as each other.

In the mooring system 1 configured as above, the locking tool 24 may include the tensile force sensor 26 that detects the tensile force applied to the mooring rope 20. The tensile force is detected at a side where the tip portion of the mooring rope 20 locked to the locking tool 24 is located. Therefore, the tensile force can be measured more stably than when the tensile force sensor is located at a side where the winch 30 is located.

Moreover, in the mooring system 1 configured as above, the locking tool 24 may include the tensile force buffer 27 that eases a change in the tensile force applied to the mooring rope 20. Normally, the vessel 5 moored to the quay is connected to the mooring ropes 20 (ship mooring ropes), and the mooring ropes 20 are different in stretchability from each other depending on their materials. When external force acts on the vessel 5, the tensile forces of the mooring ropes 20 change. A load acting on the mooring rope 20 having low stretchability is larger than each of loads acting on the other mooring ropes 20, and the mooring rope 20 having low stretchability may break. In such a case, since the tensile force buffer 27 is located at the locking tool 24, a possibility that the mooring rope 20 having lower stretchability than the other mooring ropes 20 breaks can be reduced. Thus, a tail rope located at the mooring rope 20 and serving as means for absorbing the tensile force can be omitted. Since the tail rope larger in diameter than the mooring rope 20 can be omitted, handling of the mooring rope 20 is facilitated. In addition, since the types of the ropes can be reduced, the management of the ropes is facilitated.

Moreover, in the mooring system 1 configured as above, the holding tool 69 located at the unmanned machine 6 includes the annular portion into which the mooring rope 20 is loosely insert. The annular portion does not have to have a completely annular shape and may have an annular shape which is partially open. Thus, the holding tool 69 can freely move along the mooring rope 20. Therefore, when the unmanned machine 6 conveys the mooring rope 20, the mooring rope 20 can be prevented from tangling. Furthermore, even when the unmanned machine 6 becomes uncontrollable, the unmanned machine 6 does not fly away since the movement of the unmanned machine 6 is restricted by the mooring rope 20. Thus, the unmanned machine 6 is easily collected.

### Modified Example

Modified Example of the mooring system 1 according to Embodiment 1 will be described. FIG. 7 is a diagram showing that unmanned machines 6A and 6B hang the mooring rope 20 to the mooring bit 12 in the mooring system 1 according to Modified Example of Embodiment 1. As shown in FIG. 7, the mooring system 1 according to Modified Example is different from the mooring system 1 according to Embodiment 1 in that the mooring system 1 according to Modified Example includes conveyance unmanned machines (a first unmanned machine 6A and a second unmanned machine 6B) and control devices (a first control device 60A that controls the first unmanned machine 6A and a second control device 60B that controls the second unmanned machine 6B) located at the respective conveyance unmanned machines. In the present modified example, the same reference signs are used in the drawings for the components that are the same as or similar to those in Embodiment 2, and explanations thereof are omitted.

Each of the first unmanned machine 6A and the second unmanned machine 6B is substantially the same in configuration as the unmanned machine 6 of the mooring system 1 according to Embodiment 1. The first control device 60A is substantially the same in configuration as the control device 60 of the mooring system 1 according to Embodiment 1. The first unmanned machine 6A is manually or automatically controlled by the first control device 60A. The second control device 60B is substantially the same in configuration as the control device 60 of the mooring system 1 according to Embodiment 1. The second control device 60B may further include a function of controlling the second unmanned machine 6B such that the second unmanned machine 6B automatically follows the first unmanned machine 6A. The position of the second unmanned machine 6B relative to the first unmanned machine 6A when the second unmanned machine 6B follows the first unmanned machine 6A is set in advance. For example, when the second unmanned machine 6B flies, the second unmanned machine 6B is the same in height as the first unmanned machine 6A and is located behind the first unmanned machine 6A by several meters. The first control device 60A and/or the second control device 60B can switch a control method such that the first unmanned machine 6A and/or the second unmanned machine 6B is manually controlled.

### Mooring Method Using Mooring System 1 according to Modified Example

Next, the mooring method using the mooring system 1 according to Modified Example will be described. The unmooring method using the mooring system 1 according to Modified Example is substantially the same as that in Embodiment 1. The mooring method using the mooring system 1 according to Modified Example roughly includes (1) a preparing step, (2) a rope hanging step, and (3) a rope tensing step. Since (3) the rope tensing step using the mooring system 1 according to Modified Example is substantially the same as that in Embodiment 1, an explanation thereof is omitted.

### (1) Preparing Step

The mooring rope 20 is unwound from the hawser drum 31. The mooring rope 20 may be unwound in advance from the hawser drum 31 by a length adequate when the mooring rope 20 extends to the mooring bit 12 and returns, or may be unwound little by little from the hawser drum 31 in accordance with the movements of the unmanned machines 6A and 6B. The tip portion of the unwound mooring rope 20 is locked to the locking tool 24. The intermediate portion of the mooring rope 20 which is located between the tip portion locked to the locking tool 24 and the base portion unwound from the winch 30 is held by the first unmanned machine 6A and the second unmanned machine 6B. The first unmanned machine 6A and the second unmanned machine 6B stand by at stand-by positions defined at the floating structure 10.

### (2) Rope Hanging Step

In the rope hanging step, the first unmanned machine 6A and the second unmanned machine 6B may be manually controlled by the manipulator, or at least one of the first unmanned machine 6A and the second unmanned machine 6B may be automatically controlled to perform autonomous flight.

The first unmanned machine 6A and the second unmanned machine 6B depart from the stand-by positions, move to the mooring bit 12, hang the mooring rope 20 to the mooring bit 12, and returns to the stand-by positions again. Desirably, the first unmanned machine 6A and the second unmanned machine 6B fly while maintaining a distance between the first unmanned machine 6A and the second unmanned machine 6B such that a line segment connecting the first unmanned machine 6A and the second unmanned machine 6B is substantially parallel to the quay of the mooring facility 11, and then, a portion of the mooring rope 20 which is located between the holding tool 69 of the first unmanned machine 6A and the holding tool 69 of the second unmanned machine 6B is hung to the mooring bit 12. After the mooring rope 20 is hung to the mooring bit 12, the first unmanned machine 6A and the second unmanned machine 6B release the mooring rope 20 and return to the stand-by positions, or the first unmanned machine 6A and the second unmanned machine 6B return to the stand-by positions along the mooring rope 20 while holding the mooring rope 20. Since the mooring rope 20 is conveyed by the unmanned machines 6A and 6B, the load of the mooring rope 20 applied to each of the unmanned machines 6A and 6B can be made smaller than that applied to one unmanned machine 6, and the loop of the mooring rope 20 hung to the mooring bit 12 is surely formed, and therefore, the rope hanging is stably performed.

### Embodiment 2

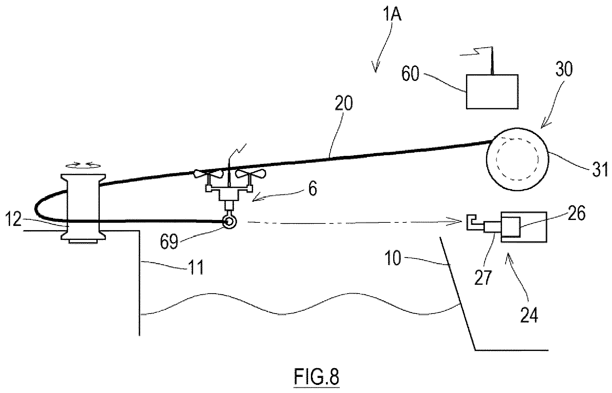

Next, Embodiment 2 will be described. FIG. 8 is a diagram showing the configuration of a mooring system 1A according to Embodiment 2 of the present disclosure. The mooring system 1A according to Embodiment 2 is different from the mooring system 1 according to Embodiment 1 in that the rope hanging is performed in such a manner that the unmanned machine 6 holds not the intermediate portion of the mooring rope 20 but the tip portion of the mooring rope 20 or a heaving line connected to the tip portion of the mooring rope 20. To be specific, the mooring method of the mooring system 1A according to Embodiment 2 is different from that of the mooring system 1 according to Embodiment 1, and the configuration of the mooring system 1A is substantially the same as that of the mooring system 1 according to Embodiment 1. Therefore, in the present embodiment, the same reference signs are used in the drawings for the components that are the same as or similar to those in Embodiment 1, and explanations thereof are omitted.

### Mooring Method Using Mooring System 1A

The mooring method using the mooring system 1A will be described. The unmooring method using the mooring system 1A is substantially the same as that in Embodiment 1. The mooring method using the mooring system 1A roughly includes (1) a preparing step, (2) a rope hanging step, and (3) a rope tensing step. The rope hanging step is performed manually or automatically. Since (3) the rope tensing step using the mooring system 1A is substantially the same as that in Embodiment 1, an explanation thereof is omitted.

### (1) Preparing Step

The mooring rope 20 is unwound from the hawser drum 31. The mooring rope 20 may be unwound in advance from the hawser drum 31 by a length adequate when the mooring rope 20 extends to the mooring bit 12 and returns, or may be unwound little by little from the hawser drum 31 in accordance with the movement of the unmanned machine 6. The tip portion of the unwound mooring rope 20 (or the heaving line connected to the tip portion) is held by the holding tool 69 of the unmanned machine 6. The tip portion of the mooring rope 20 may include a loop, and the loop may be hung to the holding tool 69. Or, the tip portion of the mooring rope 20 may be tied to the holding tool 69. The unmanned machine 6 stands by at the stand-by position defined at the floating structure 10.

### (2) Rope Hanging Step

### When Manually Performing Rope Hanging Step

When manually performing the rope hanging step, the manipulator performs the remote control of the unmanned machine 6 by using the operation tool 41 of the control device 60. The unmanned machine 6 controlled by the manipulator departs from the stand-by position, moves toward the mooring bit 12, hangs the mooring rope 20 to the mooring bit 12, and returns to the stand-by position again. The manipulator can control the unmanned machine 6 by visually confirming the image taken by the camera 67 mounted on the unmanned machine 6 or by visually grasping a positional relation between the unmanned machine 6 and the mooring bit 12.

### When Automatically Performing Rope Hanging Step

When automatically performing the rope hanging step, the designation of the mooring bit 12 as a target to which the mooring rope 20 of the mooring system 1 is hung (or the position of the mooring bit 12) is input to the control device 60 by the operator. However, the unmanned machines 6 may be controlled by one control device 60. In this case, the designation of the mooring bit 12 as the target and the designation of the mooring system 1 including the mooring rope 20 to be hung to the mooring bit 12 are input. The command of starting the rope hanging is input to the control device 60 by the operator. The control device 60 acquires the command of starting the rope hanging and calculates the flight route of the unmanned machine 6. The control device 60 calculates such a flight route that the unmanned machine 6 departs from the stand-by position, moves to the mooring bit 12, hangs the mooring rope 20 to the mooring bit 12, and returns to the stand-by position again. The control device 60 performs the automatic control of the unmanned machine 6 such that the unmanned machine 6 moves along the calculated flight route.

In the rope hanging step (both of the rope hanging step manually performed and the rope hanging step automatically performed), the unmanned machine 6 moves from the stand-by position to the mooring bit 12 while holding the tip portion of the mooring rope 20. The mooring rope 20 is hung to the mooring bit 12 in such a manner that the holding tool 69 turns about the mooring bit 12 so as to draw an arc. After the mooring rope 20 is hung to the mooring bit 12, the unmanned machine 6 returns to the stand-by position of the floating structure 10 while holding the tip of the mooring rope 20. The operator receives the tip portion of the mooring rope 20 from the unmanned machine 6 and engages the mooring rope 20 with the locking tool 24.

### Direction in which Mooring Rope 20 is wound around Mooring Bit 12

The direction in which the mooring rope 20 is wound around the mooring bit 12 will be described. In the mooring system 1A, when hanging the mooring rope 20 to the mooring bit 12 by the unmanned machine 6, the direction in which the mooring rope 20 is wound around the mooring bit 12 can be determined by the control of the unmanned machine 6. More specifically, whether the mooring rope 20 is hung to the mooring bit 12 from a front side to a rear side or from the rear side to the front side can be controlled by a turning direction of the unmanned machine 6 about the mooring bit 12. For example, the mooring rope 20 can be hung to the mooring bit 12 in such a manner that the unmanned machine 6 turns about the mooring bit 12 from the front side to the rear side or that the unmanned machine 6 turns about the mooring bit 12 from the rear side to the front side. A front side in a direction parallel to the front-rear direction of the vessel 5 of the floating structure 10 is referred to as the "front side," and its opposite side is referred to as the "rear side." Moreover, regarding the mooring rope 20 hung to the mooring bit 12, a portion extending from the tip portion engaged with the locking tool 24 to the mooring bit 12 is referred to as a first portion 21, and a portion extending from the mooring bit 12 to the hawser drum 31 is referred to as a second portion 22.

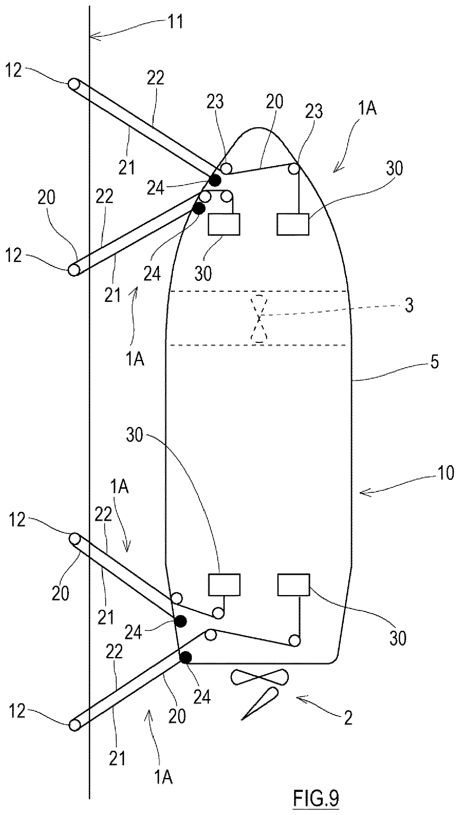

FIG. 9 is a diagram showing one example of the direction in which the mooring rope 20 is wound around the mooring bit 12. As shown in FIG. 9, regarding the mooring rope 20 located at the floating structure 10, the first portion 21 is located behind the second portion 22. To be specific, the mooring rope 20 is hung to the mooring bit 12 from the front side to the rear side. Since the mooring rope 20 is hung to the mooring bit 12 as above, the mooring rope 20 hardly tangles when the floating structure 10 moves forward to separate from the mooring facility 11.

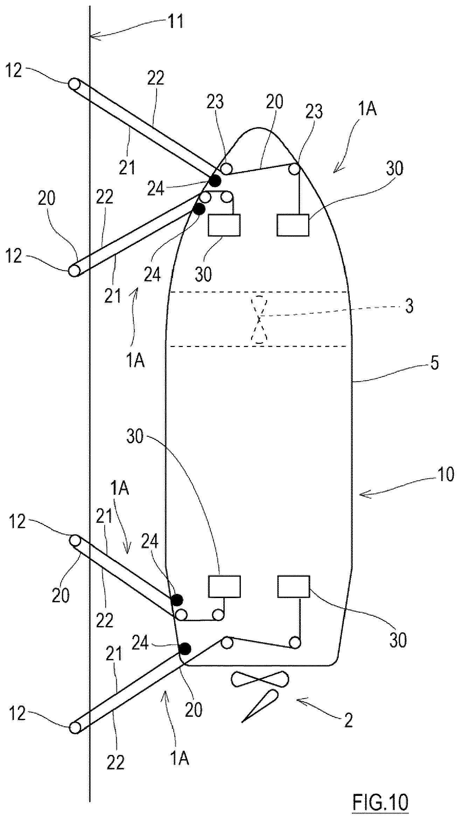

FIG. 10 is a diagram showing one example of the direction in which the mooring rope 20 is wound around the mooring bit 12. In another example, as shown in FIG. 10, regarding the mooring rope 20 located at a front portion of the floating structure 10, the first portion 21 is located behind the second portion 22. Moreover, regarding the mooring rope 20 located at a rear portion of the floating structure 10, the first portion 21 is located in front of the second portion 22. To be specific, the mooring rope 20 located at the front portion of the floating structure 10 is hung to the mooring bit 12 from the front side to the rear side, and the mooring rope 20 located at the rear portion of the floating structure 10 is hung to the mooring bit 12 from the rear side to the front side. With the mooring rope 20 hung to the mooring bit 12, the tensile force applied to the first portion 21 and the tensile force applied to the second portion 22 are substantially equal to each other. However, in some cases, the tensile force applied to the first portion 21 is higher than the tensile force applied to the second portion 22. In such cases, an increase in the tensile force can be quickly detected by the tensile force sensor 26 located at the locking tool 24.

### Modified Example

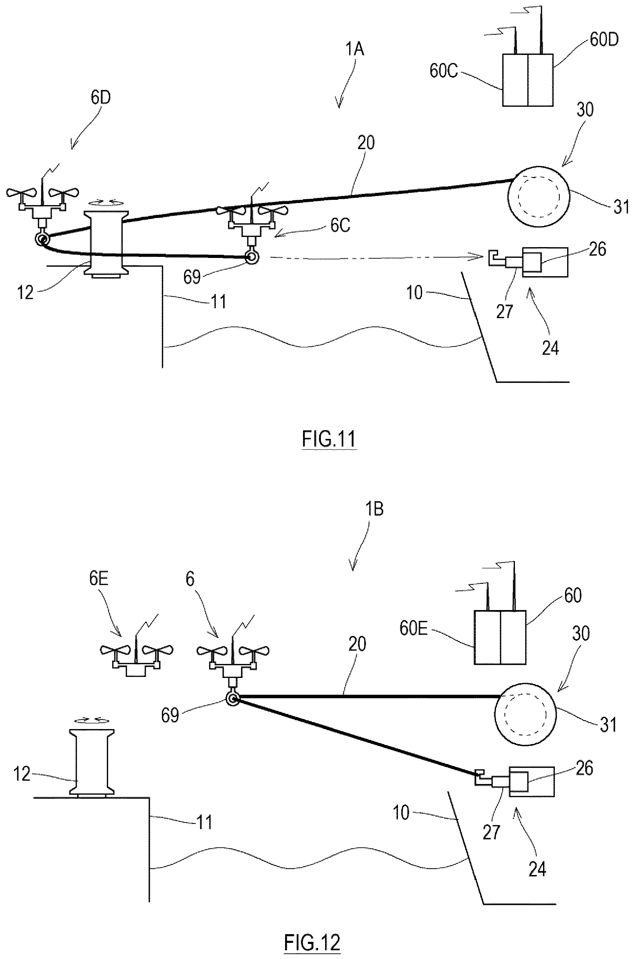

Modified Example of the mooring system 1A according to Embodiment 2 will be described. FIG. 11 is a diagram showing that unmanned machines 6C and 6D hang the mooring rope 20 to the mooring bit 12 in the mooring system 1A according to Modified Example of Embodiment 2. The mooring system 1A according to Modified Example is different from the mooring system 1A according to Embodiment 2 in that the mooring system 1A according to Modified Example includes conveyance unmanned machines (a first unmanned machine 6C and a second unmanned machine 6D) and control devices (a first control device 60C that controls the first unmanned machine 6C and a second control device 60D that controls the second unmanned machine 6D) located at the respective unmanned machines. In the present modified example, the same reference signs are used in the drawings for the components that are the same as or similar to those in Embodiment 2, and explanations thereof are omitted.

Each of the first unmanned machine 6C and the second unmanned machine 6D is substantially the same in configuration as the unmanned machine 6 of the mooring system 1 according to Embodiment 1. The first control device 60C is substantially the same in configuration as the control device 60 of the mooring system 1 according to Embodiment 1. The first unmanned machine 6C is manually or automatically controlled by the first control device 60C. The second control device 60D is substantially the same in configuration as the control device 60 of the mooring system 1 according to Embodiment 1. The second control device 60D may further include a function of controlling the second unmanned machine 6D such that the second unmanned machine 6D automatically follows the first unmanned machine 6C. The position of the second unmanned machine 6D relative to the first unmanned machine 6C when the second unmanned machine 6D follows the first unmanned machine 6C is set in advance. For example, when the second unmanned machine 6D flies, the second unmanned machine 6D is the same in height as the first unmanned machine 6C and is located behind the first unmanned machine 6C by several meters. The first control device 60C and/or the second control device 60D can switch a control method such that the first unmanned machine 6C and/or the second unmanned machine 6D is manually controlled.

### Mooring Method Using Mooring System 1A according to Modified Example

Next, the mooring method using the mooring system 1A according to Modified Example will be described. The unmooring method using the mooring system 1A according to Modified Example is substantially the same as that in Embodiment 1. The mooring method using the mooring system 1A according to Modified Example roughly includes (1) a preparing step, (2) a rope hanging step, and (3) a rope tensing step. Since (3) the rope tensing step using the mooring system 1A according to Modified Example is substantially the same as that in Embodiment 1, an explanation thereof is omitted.

### (1) Preparing Step

The mooring rope 20 is unwound from the hawser drum 31. The mooring rope 20 may be unwound in advance from the hawser drum 31 by a length adequate when the mooring rope 20 extends to the mooring bit 12 and returns, or may be unwound little by little from the hawser drum 31 in accordance with the movement of the unmanned machine 6C. The tip portion of the unwound mooring rope 20 (or the heaving line connected to the tip portion) is held by the holding tool 69 of the first unmanned machine 6C. The tip portion of the mooring rope 20 may include a loop, and the loop may be hung to the holding tool 69. Or, the tip portion of the mooring rope 20 may be tied to the holding tool 69. The intermediate portion of the mooring rope 20 which is located between the tip portion locked to the locking tool 24 and the base portion unwound from the winch 30 is held by the holding tool 69 of the second unmanned machine 6D. The first unmanned machine 6C and the second unmanned machine 6D stand by at the stand-by positions defined at the floating structure 10.

### (2) Rope Hanging Step

In the rope hanging step, the first unmanned machine 6C and the second unmanned machine 6D may be manually controlled by the manipulator, or at least one of the first unmanned machine 6C and the second unmanned machine 6D may be automatically controlled to perform autonomous flight.

The first unmanned machine 6C departs from the stand-by position, moves to the mooring bit 12, hangs the mooring rope 20 to the mooring bit 12, and returns to the stand-by position again. The mooring rope 20 is hung to the mooring bit 12 in such a manner that the holding tool 69 of the first unmanned machine 6C turns about the mooring bit 12 so as to draw an arc. After the first unmanned machine 6C departs, the second unmanned machine 6D departs from the stand-by position and moves to the mooring bit 12. The second unmanned machine 6D may perform autonomous flight from the stand-by position to the mooring bit 12 so as to follow the first unmanned machine 6C.

Until the first unmanned machine 6C returns to the stand-by position again or until the tip portion of the mooring rope 20 is locked to the locking tool 24, the second unmanned machine 6D hovers at a position beyond the mooring bit 12. The second unmanned machine 6D pulls the mooring rope 20 at a side where the mooring facility 11 is located such that the mooring bit 12 is located within the loop of the mooring rope 20. Thus, even when the mooring rope 20 loosens while the first unmanned machine 6C returns to the stand-by position from the mooring bit 12, the mooring bit 12 is maintained within the loop of the mooring rope 20, and the mooring rope 20 does not come off from the mooring bit 12.

After the first unmanned machine 6C returns to the stand-by position, the operator receives the tip portion of the mooring rope 20 from the first unmanned machine 6C and engages the tip portion of the mooring rope 20 with the locking tool 24. After the tip portion of the mooring rope 20 is locked to the locking tool 24, the second unmanned machine 6D releases the mooring rope 20.

As described above, the mooring system 1A according to Modified Example of the present embodiment is a mooring system that moors the floating structure 10 to the mooring facility 11, one of the floating structure 10 and the mooring facility 11 being the first object, the other being the second object, the mooring system 1A including:
the mooring rope 20;
the winch 30 that is located at the second object and winds and unwinds the mooring rope 20;
the locking tool 24 that is located at the second object and locks the tip portion of the mooring rope 20 such that the tip portion of the mooring rope 20 is engageable with and disengageable from the locking tool 24;
the first unmanned machine 6C including the holding tool 69 that holds the mooring rope 20;
the second unmanned machine 6D including the holding tool 69 that holds the mooring rope 20;
the first control device 60C configured to control the first unmanned machine 6C such that the first unmanned machine 6C moves from the second object to the mooring bit 12 located at the first object while holding the tip portion of the mooring rope 20, and hangs the intermediate portion of the mooring rope 20 to the mooring bit 12, the intermediate portion being a portion between the tip portion locked to the locking tool 24 and the base portion unwound from the winch 30; and
the second control device 60D configured to control the second unmanned machine 6D such that: the second unmanned machine 6D moves from the second object to the mooring bit 12 while holding the intermediate portion of the mooring rope 20; and until the first unmanned machine 6C returns to the second object or until the tip portion of the mooring rope 20 is locked to the locking tool 24, the second unmanned machine 6D stops while pulling the mooring rope 20 at a side where the first object is located.

Moreover, the mooring method according to Modified Example of the present embodiment is a mooring method of mooring the floating structure 10 to the mooring facility 11, one of the floating structure 10 and the mooring facility 11 being the first object, the other being the second object, the mooring method including:
locating at the second object the winch 30 that winds and unwinds the mooring rope 20 and the locking tool 24 that locks the tip portion of the mooring rope 20 such that the tip portion of the mooring rope 20 is engageable with and disengageable from the locking tool 24;
holding the tip portion of the mooring rope 20 by the first unmanned machine 6C;
holding the intermediate portion of the mooring rope 20 by the second unmanned machine 6D, the intermediate portion being a portion between the tip portion locked to the locking tool 24 and the base portion unwound from the winch 30;
controlling the first unmanned machine 6C by the first control device 60C such that the first unmanned machine 6C moves from the second object to the mooring bit 12 located at the first object while holding the tip portion of the mooring rope 20, hangs the intermediate portion of the mooring rope 20 to the mooring bit 12, and returns to the second object;
controlling the second unmanned machine 6D by the second control device 60D such that: the second unmanned machine 6D moves from the second object to the mooring bit 12 while holding the intermediate portion of the mooring rope 20; and until the first unmanned machine 6C returns to the second object or until the tip portion of the mooring rope 20 is locked to the locking tool 24, the second unmanned machine 6D stops at a side where the first object is located, to maintain the tension of the mooring rope 20; and
locking the tip portion of the mooring rope 20 to the locking tool 24 after the mooring rope 20 is hung to the mooring bit 12.

According to the above mooring system 1A and the above mooring method, the rope hanging work is performed by the cooperation of the first unmanned machine 6C and the second unmanned machine 6D. Especially, the tension of the mooring rope 20 is maintained by the second unmanned machine 6D from when the first unmanned machine 6C hangs the mooring rope 20 to the mooring bit 12 until the first unmanned machine 6C returns to the second object. Therefore, the mooring rope 20 can be prevented from loosening and coming off from the mooring bit 12.

### Embodiment 3

Next, Embodiment 3 will be described. FIG. 12 is a diagram showing the configuration of the mooring system 1B according to Embodiment 3 of the present disclosure. The mooring system 1B according to Embodiment 3 shown in FIG. 12 is different from the mooring system 1 according to Embodiment 1 in that the mooring system 1B further includes a leading unmanned machine 6E and a leading control device 60E configured to control the leading unmanned machine 6E. Except for these differences, the mooring system 1B according to Embodiment 3 is substantially the same in configuration as the mooring system 1 according to Embodiment 1. Therefore, in the present embodiment, differences from the mooring system 1 according to Embodiment 1 will be described in detail. The same reference signs are used in the drawings for the components that are the same as or similar to those in Embodiment 1, and explanations thereof are omitted.

The leading control device 60E is substantially the same in configuration as the control device 60 of the mooring system 1 according to Embodiment 1. The leading unmanned machine 6E is manually or automatically controlled by the leading control device 60E. The control device 60 is substantially the same in configuration as the control device 60 of the mooring system 1 according to Embodiment 1, and in addition, includes a function of controlling the conveyance unmanned machine 6 such that the conveyance unmanned machine 6 automatically follows the leading unmanned machine 6E. The control device 60 can switch the control method such that the conveyance unmanned machine 6 is manually controlled. The position of the conveyance unmanned machine 6 relative to the leading unmanned machine 6E when the conveyance unmanned machine 6 follows the leading unmanned machine 6E is set in advance. For example, when the conveyance unmanned machine 6 flies, the conveyance unmanned machine 6 is the same in height as the leading unmanned machine 6E and is located behind the leading unmanned machine 6E by several meters.

The conveyance unmanned machine 6 includes the holding tool 69 that holds the mooring rope 20, and the mooring rope 20 is held by the conveyance unmanned machine 6. Therefore, an airframe that is larger in size and conveyance capacity than the leading unmanned machine 6E is adopted as the conveyance unmanned machine 6. Moreover, since the leading unmanned machine 6E does not carry the mooring rope 20, an airframe that is lighter than the conveyance unmanned machine 6 is adopted as the leading unmanned machine 6E, and sensors that search for a better route are mounted on the leading unmanned machine 6E.

As described above, the mooring system 1B according to the present embodiment is a mooring system that moors the floating structure 10 to the mooring facility 11, one of the floating structure 10 and the mooring facility 11 being the first object, the other being the second object, the mooring system 1B including:
the mooring rope 20;
the winch 30 that is located at the second object and winds and unwinds the mooring rope 20;
the locking tool 24 that is located at the second object and locks the tip portion of the mooring rope 20 such that the tip portion of the mooring rope 20 is engageable with and disengageable from the locking tool 24;
at least one conveyance unmanned machine 6 including the holding tool 69 that holds the mooring rope 20;
the leading unmanned machine 6E that leads the movement of the conveyance unmanned machine 6;
the leading control device 60E configured to control the leading unmanned machine 6E; and
the control device 60 configured to control the conveyance unmanned machine 6.

The control device 60 controls the conveyance unmanned machine 6 such that the conveyance unmanned machine 6 follows the leading unmanned machine 6E.

The leading control device 60E controls the leading unmanned machine 6E such that the conveyance unmanned machine 6 following the leading unmanned machine 6E moves from the second object to the mooring bit 12 located at the first object while holding the mooring rope 20, and hangs the intermediate portion of the mooring rope 20 to the mooring bit 12, the intermediate portion being a portion between the tip portion locked to the locking tool 24 and the base portion unwound from the winch 30.

Moreover, the mooring method according to the present embodiment is a mooring method of mooring the floating structure 10 to the mooring facility 11, one of the floating structure 10 and the mooring facility 11 being the first object, the other being the second object, the mooring method including:
locating at the second object the winch 30 that winds and unwinds the mooring rope 20 and the locking tool 24 that locks the tip portion of the mooring rope 20 such that the tip portion of the mooring rope 20 is engageable with and disengageable from the locking tool 24;
holding the mooring rope 20 by at least one conveyance unmanned machine 6;
controlling the leading unmanned machine 6E and the conveyance unmanned machine 6 such that the leading unmanned machine 6E leads the movement of the conveyance unmanned machine 6, and the conveyance unmanned machine 6 follows the leading unmanned machine 6E, and therefore, the conveyance unmanned machine 6 moves from the second object to the mooring bit 12 located at the first object while holding the mooring rope 20, and hangs the intermediate portion of the mooring rope 20 to the mooring bit 12, the intermediate portion being a portion between the tip portion locked to the locking tool 24 and the base portion unwound from the winch 30; and
locking the tip portion of the mooring rope 20 to the locking tool 24 before (or after) the mooring rope 20 is hung to the mooring bit 12.

According to the above mooring system 1B and the above method, the leading unmanned machine 6E that searches for the route and the conveyance unmanned machine 6 that conveys the mooring rope 20 has the respective functions. Therefore, the leading unmanned machine 6E and the conveyance unmanned machine 6 can have the functions suitable for their respective roles. Thus, the accuracy of the searching of the route by the leading unmanned machine 6E can be improved, and therefore, the flight stability of the leading unmanned machine 6E and the conveyance unmanned machine 6 can be improved.

The present specification discloses some embodiments. Two or more of some embodiments may be suitably combined with each other. For example, the features of the mooring system 1B are applicable to the mooring system 1A according to Embodiment 2. To be specific, in the mooring method using the mooring system 1A according to Embodiment 2, the unmanned machine 6 may be controlled such that the leading unmanned machine 6E leads the movement of the unmanned machine 6, and the unmanned machine 6 follows the leading unmanned machine 6E.

The functionality of the calculator 45 and the controller 68 disclosed herein may be implemented using circuitry or processing circuitry which includes general purpose processors, special purpose processors, integrated circuits, ASICs ("Application Specific Integrated Circuits"), conventional circuitry and/or combinations thereof which are configured or programmed to perform the disclosed functionality. Processors are considered processing circuitry or circuitry as they include transistors and other circuitry therein. In the disclosure, the circuitry, units, or means are hardware that carry out the recited functionality. The hardware may be any hardware disclosed herein or otherwise known which is programmed or configured to carry out the recited functionality. When the hardware is a processor which may be considered a type of circuitry, the circuitry, means, or units are a combination of hardware and software, the software being used to configure the hardware and/or processor.

### Reference Signs List

- 1, 1A, 1B: mooring system
- 6, 6A-6D: unmanned machine (for conveyance)
- 6E: leading unmanned machine
- 10: floating structure
- 11: mooring facility
- 12: mooring bit
- 20: mooring rope
- 24: locking tool
- 26: tensile force sensor
- 27: tensile force buffer
- 30: winch
- 60, 60A to 60F: control device
- 69: holding tool

## Claims

1. A mooring system that moors a floating structure to a mooring facility, one of the floating structure and the mooring facility being a first object, the other being a second object, the mooring system comprising:
a mooring rope;
a winch that is located at the second object and winds and unwinds the mooring rope;
a locking tool that is located at the second object and locks a tip portion of the mooring rope such that the tip portion of the mooring rope is engageable with and disengageable from the locking tool;
at least one unmanned machine including a holding tool that holds the mooring rope; and
a control device configured to control the unmanned machine such that the unmanned machine moves from the second object to a mooring bit located at the first object while holding the mooring rope, and hangs an intermediate portion of the mooring rope to the mooring bit, the intermediate portion being a portion between the tip portion of the mooring rope and a base portion of the mooring rope which is unwound from the winch.

2. The mooring system according to claim 1, wherein the control device controls the unmanned machine such that the unmanned machine moves from the second object to the mooring bit while holding the intermediate portion of the mooring rope, the intermediate portion being a portion between the tip portion engaged with the locking tool and the base portion unwound from the winch.

3. The mooring system according to claim 1 or 2, wherein the locking tool includes a tensile force sensor that detects tensile force applied to the mooring rope.

4. The mooring system according to any one of claims 1 to 3, wherein the locking tool includes a tensile force buffer that eases a change in tensile force applied to the mooring rope.

5. The mooring system according to any one of claims 1 to 4, wherein the holding tool includes an annular portion into which the mooring rope is loosely inserted.

6. The mooring system according to any one of claims 1 to 5, wherein:
the unmanned machine is a conveyance unmanned machine that conveys the mooring rope;
the mooring system further comprises a leading unmanned machine that leads movement of the conveyance unmanned machine; and
the control device controls the conveyance unmanned machine such that the conveyance unmanned machine follows the leading unmanned machine.

7. The mooring system according to any one of claims 1 to 5, wherein the unmanned machine comprises:
a first unmanned machine that holds the tip portion of the mooring rope when conveying the mooring rope; and
a second unmanned machine that holds the intermediate portion of the mooring rope when conveying the mooring rope.

8. The mooring system according to any one of claims 1 to 5, wherein the unmanned machine comprises:
a first unmanned machine that holds a first portion of the intermediate portion of the mooring rope when conveying the mooring rope; and
a second unmanned machine that holds a second portion of the intermediate portion of the mooring rope when conveying the mooring rope.

9. A mooring method of mooring a floating structure to a mooring facility, one of the floating structure and the mooring facility being a first object, the other being a second object, the mooring method comprising:
locating at the second object a winch that winds and unwinds a mooring rope and a locking tool that is engageable with and disengageable from a tip portion of the mooring rope;
holding the mooring rope by at least one unmanned machine;
controlling the unmanned machine such that the unmanned machine moves from the second object to a mooring bit located at the first object while holding the mooring rope, and hangs an intermediate portion of the mooring rope to the mooring bit, the intermediate portion being a portion between the tip portion of the mooring rope and a base portion of the mooring rope which is unwound from the winch; and
locking the tip portion of the mooring rope to the locking tool before or after the mooring rope is hung to the mooring bit.

10. The mooring method according to claim 9, wherein:
the unmanned machine holds the intermediate portion of the mooring rope, the intermediate portion being a portion between the tip portion engaged with the locking tool and the base portion unwound from the winch; and
the unmanned machine moves from the second object to the mooring bit while holding the intermediate portion of the mooring rope.

11. The mooring method according to claim 9 or 10, wherein:
the unmanned machine is a conveyance unmanned machine that conveys the mooring rope;
a leading unmanned machine leads movement of the conveyance unmanned machine; and
the conveyance unmanned machine follows the leading unmanned machine.

12. The mooring method according to claim 9 or 10, wherein the unmanned machine comprises:
a first unmanned machine that holds the tip portion of the mooring rope when conveying the mooring rope; and
a second unmanned machine that holds the intermediate portion of the mooring rope when conveying the mooring rope.

13. The mooring method according to claim 9 or 10, wherein the unmanned machine comprises:
a first unmanned machine that holds a first portion of the intermediate portion of the mooring rope when conveying the mooring rope; and
a second unmanned machine that holds a second portion of the intermediate portion of the mooring rope when conveying the mooring rope.
